# EUROPEAN PATENT SPECIFICATION

(11) **EP 3 712 573 B1**
(45) Date of publication and mention of the grant of the patent: **29.05.2024**
(21) Application number: 20161822.0
(22) Date of filing: 09.03.2020
(51) Int. Cl.: G01F 23/26, G01F 23/263, G01F 15/18

(54) **ELECTRIC POWER AND DATA COMMUNICATIONS WITHIN A FUEL TANK AND ACROSS A WALL OF THE FUEL TANK USING RESISTIVE NON-METALLIC WIRE**
ELEKTRISCHE ENERGIE UND DATENKOMMUNIKATION INNERHALB EINES KRAFTSTOFFTANKS UND ÜBER EINE WAND DES KRAFTSTOFFTANKS UNTER VERWENDUNG EINES RESISTIVEN NICHTMETALLISCHEN DRAHTES
COMMUNICATION DE PUISSANCE ÉLECTRIQUE ET DE DONNÉES À L'INTÉRIEUR D'UN RÉSERVOIR DE CARBURANT ET À TRAVERS UNE PAROI DU RÉSERVOIR DE CARBURANT À L'AIDE D'UN FIL RÉSISTIF NON MÉTALLIQUE

(30) Priority: 19.03.2019 US 201962820328 P; 31.10.2019 US 201916670229
(43) Date of publication of application: 23.09.2020
(73) Proprietor: The Boeing Company, Arlington, VA 22202 (US)
(72) Inventor: ROBB, Andrew M., Chicago, IL 60606 (US); GROAT, John Everett, Chicago, IL 60606 (US)
(74) Representative: Lissandrini, Marco

(56) References cited:
- EP-A1- 3 462 141
- US-A1- 2005 197 720
- US-A1- 2014 331 763
- US-A1- 2015 307 200
- US-A1- 2018 299 312

## Description

### FIELD

The subject disclosure relates generally to vehicles, such as aircraft, and more particularly to electric power and data communications within a fuel tank and across a wall of the fuel tank using resistive non-metallic wire and optical hybrid fuel height sensor.

### BACKGROUND

Installation of electrically conductive materials in a fuel tank requires significant design detail and consideration to minimize a possibility of an electrical discharge within the fuel tank. Historically, non-metallic conductors such as carbon loaded plastics and foams have been widely used for shielding and anti-static applications. When exposed to transient electric fields these materials are resistant to the high current flows and sparks that would ignite fuels. Additionally, accurate and dependable measurements of the quantity of fuel in the tanks needs to be made.

Document US 2014/0331763, in accordance with its abstract, states an apparatus for measuring the level of fuel in a fuel tank. The apparatus comprises an in-tank measuring system that provides an oscillating output signal generated, for example, by an oscillator such as a multivibrator, where the oscillating output signal has a frequency corresponding to the fuel level. The in-tank measuring system includes a capacitive fuel probe mounted within the fuel tank to contact the fuel. The fuel probe has a capacitance that is a function of the level of the fuel. The oscillator is configured for mounting within the fuel tank at a position in close proximity to the capacitive fuel probe. The oscillator circuit uses the capacitance of the fuel probe to generate the oscillating output signal. A communication path communicates the oscillating output signal from the clock circuit to a circuit exterior to the fuel tank. Transmission lines may also be composed of much higher resistance wiring, such as carbon and conductive polymers.

### SUMMARY

In accordance with an example, a system includes a fuel height sensor and a sealed connector extending through a wall of a fuel tank. The system also includes an electric power connection between the fuel height sensor and the sealed connector. The system additionally includes an internal data communications connection between the fuel height sensor and the sealed connector, wherein the electric power connection comprises a resistive non-metallic wire. The sealed connector comprises an internal electronic circuit.

In accordance with another example, a vehicle includes a fuel tank and a power and data communications system within the fuel tank. The power and data communications system includes a fuel height sensor and a sealed connector extending through a wall of the fuel tank. The power and data communications system also includes an electric power connection between the fuel height sensor and the sealed connector. The power and data communications system additionally includes an internal data communications connection between the fuel height sensor and the sealed connector, wherein the electric power connection comprises a resistive non-metallic wire, and the sealed connector comprises an internal electronic circuit.

In accordance with another example, a method for monitoring a quantity of fuel in a fuel tank includes inserting one or more fuel height sensors in the fuel tank. The method also includes providing an electric power connection between each fuel height sensor and a sealed connector extending through a wall of the fuel tank. The method additionally includes providing an internal data communications connection between each fuel height sensor and the sealed connector, wherein the electric power connection comprises a resistive non-metallic wire, and the sealed connector comprises an internal electronic circuit.

In accordance with an example and any of the preceding examples, wherein the resistive non-metallic wire comprises a carbon loaded thermoplastic.

In accordance with an example and any of the preceding examples, wherein the resistive non-metallic wire comprises a carbon loaded polyether ether ketone (PEEK) thermoplastic.

In accordance with an example and any of the preceding examples, wherein the resistive non-metallic wire comprises a resistance between about 100 ohms/meter and about 1 Mohms/meter.

In accordance with an example and any of the preceding examples, wherein the internal data communications connection comprises another resistive non-metallic wire.

In accordance with an example and any of the preceding examples, wherein the internal data communications connection comprises a signal hi resistive non-metallic wire and a signal lo resistive non-metallic wire.

In accordance with an example and any of the preceding examples, wherein the internal data communications connection comprises an analog signal out connection.

In accordance with an example and any of the preceding examples, wherein the internal data communications connection comprises a digital signal out connection.

In accordance with an example and any of the preceding examples, wherein the internal data communications connection comprises an optical signal out connection.

In accordance with an example and any of the preceding examples, further comprising an external data communications connection outside the fuel tank between the sealed connector and an optical data converter or a data concentrator.

In accordance with an example and any of the preceding examples, further comprising an external data communications connection outside the fuel tank between the sealed connector and either a probe reader or a data concentrator.

In accordance with an example and any of the preceding examples, further comprising an external data communications connection outside the fuel tank between the sealed connector and a device of a core computer system (CCS).

In accordance with an example and any of the preceding examples, wherein the external data communications connection outside the fuel tank comprises a digital data bus, Aeronautical Radio, Incorporated (ARINC) bus, or a Controller Area Network (CAN) bus.

In accordance with an example and any of the preceding examples, wherein the fuel height sensor comprises a fuel height probe and the fuel height probe comprises a local electric ground connection.

In accordance with an example and any of the preceding examples, wherein the fuel height sensor comprises a floating fuel height probe without an electric ground connection.

In accordance with an example and any of the preceding examples, further comprising at least one of a data concentrator, a core computer system, an optical reader, a probe reader, an amplifier, or a digital data bus, Aeronautical Radio, Incorporated (ARINC) bus, or a Controller Area Network (CAN) bus connected to the sealed connector.

In accordance with an example and any of the preceding examples, wherein the sealed connector comprises an internal electronic circuit.

In accordance with an example and any of the preceding examples, further comprising an external data communications connection between the sealed connector and at least one of a core computer system device, an optical reader, a probe reader, an amplifier, or a digital data bus, Aeronautical Radio, Incorporated (ARINC) bus, or a Controller Area Network (CAN) bus.

In accordance with an example and any of the preceding examples, further comprising: a data concentrator communicatively coupled to the fuel height sensor through a resistive non-metallic wire on at least one portion of a link between the data concentrator and the fuel height sensor; and an input of the sealed connector configured to receive data from the fuel height sensor over the resistive non-metallic wire on the at least one portion of the link between the data concentrator and the fuel height sensor.

In accordance with an example and any of the preceding examples, wherein the resistive non-metallic wire is internal to the fuel tank.

In accordance with an example and any of the preceding examples, further comprising a data concentrator communicatively coupled to the fuel height sensor through a first wire and a second wire, wherein the first wire and the second wire have different electrical properties.

In accordance with an example and any of the preceding examples, wherein the first wire and the second wire are each in a different environment. One environment is a wet environment and the other environment being a dry environment.

In accordance with an example and any of the preceding examples, further comprising a data concentrator communicatively coupled to the fuel height sensor over a communications link comprising two or more segments, wherein a first segment is over a resistive non-metallic wire.

In accordance with an example and any of the preceding examples, wherein the data concentrator further comprises an output configured to transmit data based on fuel height data received from the fuel height sensor to a fuel management system embodied on a core computer system configured to convey a fuel quantity indication based on the fuel height data received from the fuel height probe.

The features, functions, and advantages that have been discussed can be achieved independently in various examples or may be combined in yet other examples further details of which can be seen with reference to the following description and drawings.

In accordance with an example, a system includes an optical hybrid fuel height sensor and a sealed connector extending through a wall of a fuel tank. The system also includes an electric power connection between the optical hybrid fuel height sensor and the sealed connector, wherein the electric power connection includes a resistive non-metallic wire. The system also includes a sealed optical connector extending through the wall of the fuel tank. The system further includes an internal data communications connection between the optical hybrid fuel height sensor and the sealed optical connector. The internal data communications connection includes an optical signal out connection.

In accordance with another example, a vehicle includes a fuel tank and a power and data communications system within the fuel tank. The power and data communications system includes an optical hybrid fuel height sensor and a sealed connector extending through a wall of the fuel tank. The power and data communications system also includes an electric power connection between the optical hybrid fuel height sensor and the sealed connector, wherein the electric power connection comprises a resistive non-metallic wire. The power and data communications system additionally includes a sealed optical connector extending through the wall of the fuel tank. The power and data communications system further includes an internal data communications connection between the optical hybrid fuel height sensor and the sealed optical connector. The internal data communications connection includes an optical signal out connection.

In accordance with another example, a method includes inserting one or more optical hybrid fuel height sensors in a fuel tank and providing an electric power connection between each optical hybrid fuel height sensor and a sealed connector extending through a wall of the fuel tank. The method also includes providing a sealed optical connector extending through the wall of the fuel tank and providing an internal data communications connection between each optical hybrid fuel height sensor and the sealed optical connector. The internal data communications connection includes an optical signal out connection.

In accordance with an example and any of the preceding examples, wherein the resistive non-metallic wire includes a carbon loaded thermoplastic.

In accordance with an example and any of the preceding examples, wherein the resistive non-metallic wire includes a carbon loaded polyether ether ketone (PEEK) thermoplastic.

In accordance with an example and any of the preceding examples, wherein the resistive non-metallic wire includes a resistance between about 100 ohms/meter and about 1 Mohms/meter.

In accordance with an example and any of the preceding examples, wherein the optical hybrid fuel height sensor includes an optical transmitter configured to convert fuel height electrical signals to fuel height optical signals.

In accordance with an example and any of the preceding examples, wherein the internal data communications connection includes an optical fiber that couples the optical transmitter and the sealed optical connector.

In accordance with an example and any of the preceding examples, wherein the sealed optical connector includes an optical connector disposed within the sealed connector and the optical connector connects the internal data communications connection to an external data communications connection.

In accordance with an example and any of the preceding examples, wherein the sealed optical connector includes a dedicated sealed optical connector that is separate from the sealed connector and connects the internal data communications connection to an external data communications connection.

In accordance with an example and any of the preceding examples, wherein the sealed optical connector includes an optical fiber that extends intact through the wall of the fuel tank and between the optical transmitter and an optical data converter, or a data concentrator, outside the fuel tank.

In accordance with an example and any of the preceding examples, further including an external data communications connection outside the fuel tank between the sealed optical connector and a device of a core computer system (CCS).

In accordance with an example and any of the preceding examples, wherein the external data communications connection includes an optical data converter connected between the sealed optical connector and the CCS, the optical data converter being configured to convert optical signals to electrical signals for transmission on a conductive metal wire to the CCS.

In accordance with an example and any of the preceding examples, wherein the external data communications connection includes a data concentrator connected between the sealed optical connector and the CCS, the data concentrator being configured to read a multitude of fiber optic signals and transmit a single stream of data to the CCS.

In accordance with an example and any of the preceding examples, wherein the electric power connection includes a two-wire electric power connection.

In accordance with an example and any of the preceding examples, wherein the electric power connection includes a one-wire electric power connection and a current return through a local ground connection of the optical hybrid fuel height sensor.

In accordance with an example and any of the preceding examples, wherein the optical hybrid fuel height sensor includes a fuel height probe and the fuel height probe comprises a local electric ground connection.

In accordance with an example and any of the preceding examples, wherein the optical hybrid fuel height sensor includes a floating fuel height probe without an electric ground connection.

In accordance with an example, a system includes a plurality of fuel height sensors within a fuel tank and a sealed active connector extending through a wall of the fuel tank. The sealed active connector includes an internal electronic circuit configured to receive data from the plurality of fuel height sensors. The system also includes an electric power connection between each of the fuel height sensors and the sealed active connector. The system additionally includes an internal data communications connection between each of the fuel height sensors and the sealed active connector. At least the electric power connection between each fuel height sensor and the sealed active connector includes a resistive non-metallic wire.

In accordance with another example, a vehicle includes a fuel tank and a system for power and data communications within the fuel tank and across a wall of the fuel tank. The system includes a plurality of fuel height sensors and a sealed active connector extending through a wall of the fuel tank. The sealed active connector includes an internal electronic circuit configured to receive data from the plurality of fuel height sensors. The system also includes an electric power connection between each of the fuel height sensors and the sealed active connector. The system additionally includes an internal data communications connection between each of the fuel height sensors and the sealed active connector. At least the electric power connection between each fuel height sensor and the sealed active connector includes a resistive non-metallic wire.

In accordance with another example, a method includes inserting one or more fuel height sensors in a fuel tank. The method also includes providing an electric power connection between each fuel height sensor and a sealed active connector extending through a wall of the fuel tank. The method additionally includes providing an internal data communications connection between each fuel height sensor and the sealed active connector. At least the electric power connection includes a resistive non-metallic wire.

In accordance with an example and any of the preceding examples, wherein the internal electronic circuit is further configured to format the data from the fuel height sensors to Aeronautical Radio, Incorporated (ARINC) data.

In accordance with an example and any of the preceding examples, wherein the sealed active connector is directly connected to devices of a core computer system (CCS) by an external data communications connection outside the fuel tank.

In accordance with an example and any of the preceding examples, wherein the external data communications connection includes one of a digital data bus, Aeronautical Radio, Incorporated (ARINC) bus, or a Controller Area Network (CAN) bus.

In accordance with an example and any of the preceding examples, wherein the sealed active connector includes a connector shell and the internal electronic circuit includes a microprocessor removably disposed within the connector shell.

In accordance with an example and any of the preceding examples, wherein the sealed active connector includes an active adapter connected to a passive sealed connector that extends through the wall of the fuel tank. The internal electronic circuit is disposed within the active adapter and the active adapter is removable from the passive sealed connector without removing the passive sealed connector from the wall of the fuel tank.

In accordance with an example and any of the preceding examples, wherein the fuel tank is mounted in a wing of an aircraft and the plurality of fuel height sensors are distributed at predetermined different locations within the fuel tank to accurately measure a quantity of fuel within the fuel tank.

In accordance with an example and any of the preceding examples, wherein the resistive non-metallic wire includes a carbon loaded thermoplastic.

In accordance with an example and any of the preceding examples, wherein the resistive non-metallic wire includes a carbon loaded polyether ether ketone (PEEK) thermoplastic.

In accordance with an example and any of the preceding examples, wherein the resistive non-metallic wire includes a resistance between about 100 ohms/meter and about 1 Mohms/meter.

In accordance with an example and any of the preceding examples, wherein the internal data communications connection includes a resistive non-metallic wire.

In accordance with an example and any of the preceding examples, wherein the internal data communications connection includes an analog signal out connection.

In accordance with an example and any of the preceding examples, wherein the internal data communications connection includes a digital signal out connection.

The features, functions, and advantages that have been discussed can be achieved independently in various examples or may be combined in yet other examples further details of which can be seen with reference to the following description and drawings.

Currently claimed invention can be embodied as per figures 1D, 2A, 2B, 3A-3D, 14 and 15 briefly described below.

### BRIEF DESCRIPTION OF THE DRAWINGS

FIG. 1A is a block schematic diagram of an example of a system for electric power and data communications within a fuel tank and across a wall of the fuel tank in accordance with an example of the subject disclosure.
FIG. 1B is a block schematic diagram of another example of a system for electric power and data communications within a fuel tank and across a wall of the fuel tank in accordance with another example of the subject disclosure.
FIG. 1C is a block schematic diagram of another example of a system for electric power and data communications within a fuel tank and across a wall of the fuel tank in accordance with a further example of the subject disclosure.
FIG. 1D is a block schematic diagram of an example of a system for electric power and data communications within a fuel tank and across a wall of the fuel tank in accordance with another example of the present invention.
FIGS. 2A and 2B are an illustration of an example of a fuel height to capacitance probe in accordance with an example of the subject disclosure.
FIG. 3A is a block schematic diagram of an example of a sealed active connector including an internal electronic circuit in accordance with an example of the subject disclosure.
FIG. 3B is an illustration of an example of a sealed active connector including an internal electronic circuit in accordance with an example of the subject disclosure.
FIG. 3C is a block schematic diagram of example of a sealed active connector in accordance with a further example of the subject disclosure.
FIG. 3D is an illustration of a portion of an aircraft including a plurality of fuel tanks in accordance with an example of the subject disclosure.
FIGS. 4-11 are examples of different electric power and data communications configurations for a fuel tank in accordance with different examples of the subject disclosure.
FIGS. 12, 13A and 13B are examples of electric power and data communications configurations within a fuel tank including an optical hybrid fuel height sensor and optical signal out connection in accordance with different examples of the subject disclosure
FIG. 14 is an example of a vehicle including a system for power and data communications within a fuel tank and across a wall of the fuel tank in accordance with an example of the subject disclosure.
FIG. 15 is a flow chart of an example of a method for monitoring a quantity of fuel in a fuel tank in accordance with an example of the subject disclosure.

### DETAILED DESCRIPTION

The following detailed description of examples refers to the accompanying drawings, which illustrate specific examples of the disclosure. Other examples having different structures and operations do not depart from the scope of the subject disclosure. Like reference numerals may refer to the same element or component in the different drawings.

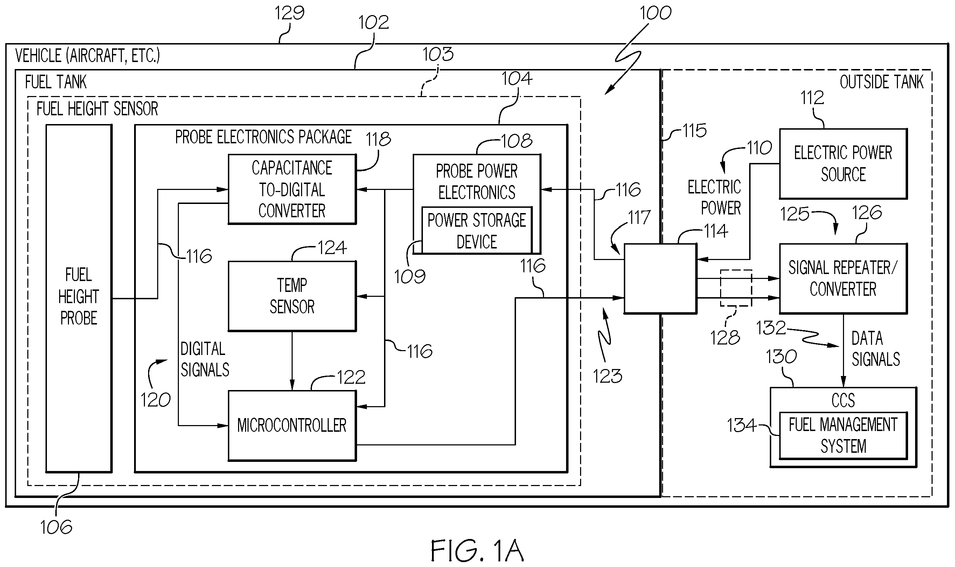

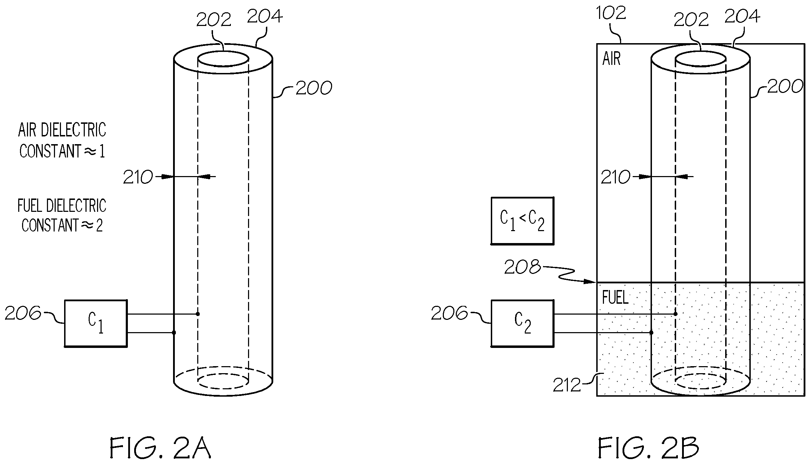

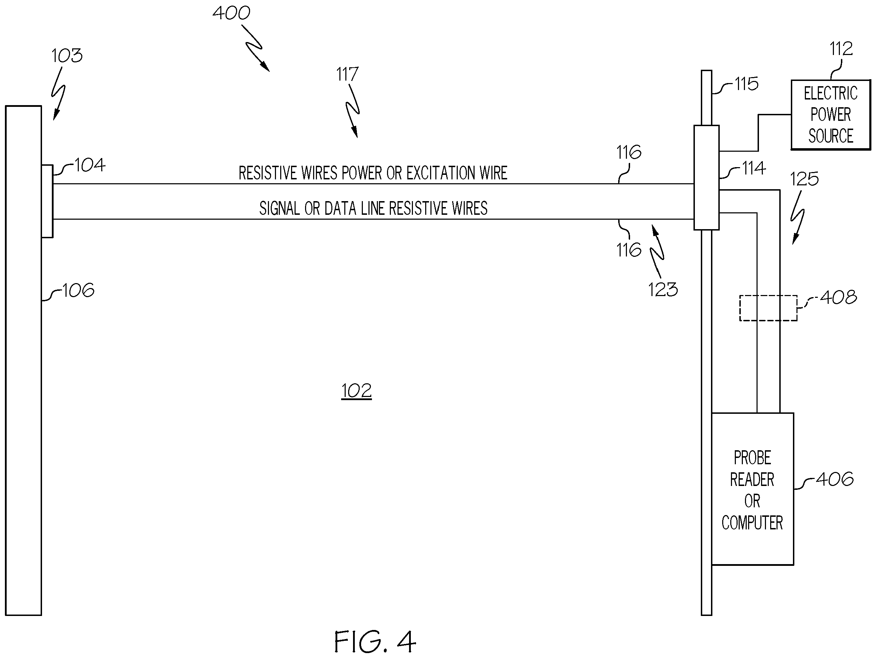

FIG. 1A is a block schematic diagram of an example of a system 100 for electric power and data communications within a fuel tank 102 and across a wall 115 of the fuel tank 102 in accordance with an example of the subject disclosure. In the example of FIG. 1A, the system 100 in onboard a vehicle 129, for example, an aircraft. The system 100 includes one or more fuel height sensors 103 disposed within the fuel tank 102 and at different locations within the fuel tank to accurately measure a quantity of fuel in the fuel tank 102. Each fuel height sensor 103 includes a probe electronics package 104 and a fuel height probe 106. In accordance with an example, the fuel height probe 106 is a fuel height to capacitance probe, for example, fuel height to capacitance probe 200 illustrated in FIG. 2A-2B. Referring also to FIG. 2A-2B, FIG. 2A-2B is an illustration of an example of a fuel height to capacitance probe 200 in accordance with an example of the subject disclosure. The fuel height to capacitance probe 200 includes two concentric tubes 202 and 204. The fuel height 208 is measured by measuring the capacitance 206 between the concentric tubes 202 and 204 placed in the fuel tank 102. The spacing 210 between the tubes 202 and 204 is carefully controlled, and because the dielectric constant of fuel is approximately twice that of air, changes in the fuel height 208 can be read by changes in the capacitance 206 measured between the tubes 202 and 204. From the fuel height 208 reading given by the fuel height to capacitance probe 200, the volume of fuel in the fuel tank 102 can be determined, and ultimately, the weight of the fuel 212 is calculated based on the density of the fuel 212 by a device 406 (FIG. 4). In accordance with an example, for example the example in FIG. 4, examples of the device 406 include, but are not necessarily limited to, a probe reader, a computer or other device. In the exemplary example in FIG. 1A, the fuel weight is calculated by a core computer system (CCS) 130. The CCS 130 receives data from multiple fuel height sensors 103 and data from a fuel density measurement to calculate total fuel weight on a vehicle 129. The fuel weight is reported to a flight crew and/or a ground servicing crew in the example of the system 100 being onboard an aircraft.

The probe electronics package 104 includes probe power electronics 108. The probe power electronics 108 receive electric power 110 from an electric power source 112 located outside the fuel tank 102. The probe power electronics 108 include filters and provide stable electric power to oscillators and other components of the probe electronics package 104. In accordance with an example, the probe power electronics 108 also includes a power storage device 109, such as a capacitor, to provide any additional power for increased power requirements during fuel height measurement and/or communications. In another example, the power storage device 109 is a separate component from the probe power electronics 108.

A sealed connector 114 extends through a wall 115 of the fuel tank 102. An electric power connection 117 between the sealed connector 114 and the fuel height sensor 103 provides electric power 110 from the electric power source 112 outside the fuel tank 102 to the fuel height sensor 103. The electric power connection 117 includes a resistive non-metallic wire 116. The sealed connector 114 is configured for connecting components of the probe electronics package 104 within the fuel tank 102 to elements outside the fuel tank 102, such as the electric power source 112 and other devices for determining the quantity of fuel in the fuel tank 102. The sealed connector 114 is electrically connected to the probe power electronics 108 within the fuel tank 102 by the resistive non-metallic wire 116. In accordance with an example, at the sealed connector 114, the electric power and communications signals transition to metallic wiring outside of the fuel tank 102. In accordance with an example, the resistive non-metallic wire 116 is a carbon loaded thermoplastic. In an example, the resistive non-metallic wire 116 is a carbon loaded polyether ether ketone (PEEK) thermoplastic. The resistive non-metallic wire 116 includes a resistance between about 100 ohms/meter and about 1 Mega-ohms/meter. Components of the fuel height sensor 103 and probe electronics package 104 are interconnected as illustrated in the example in FIG. 1A by resistive non-metallic wire 116.

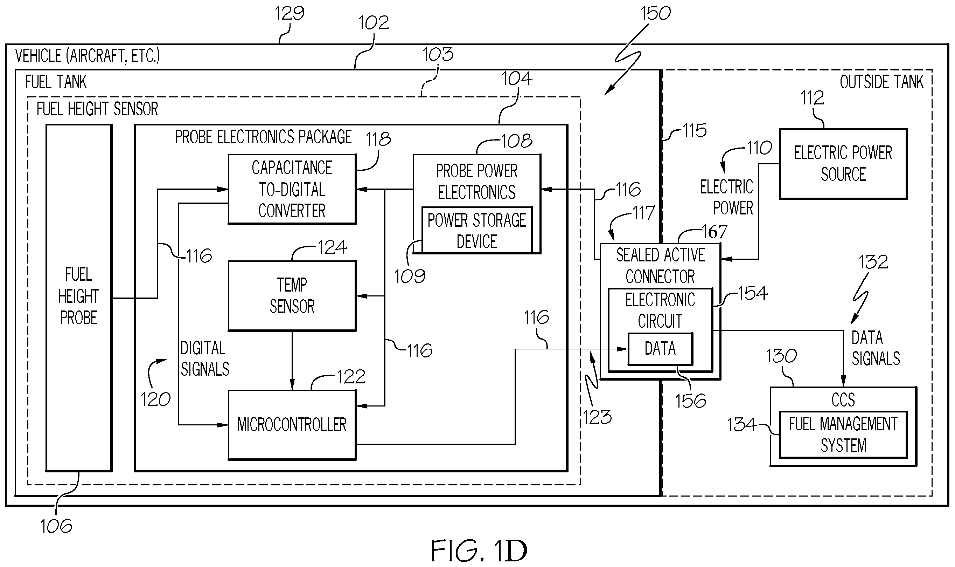

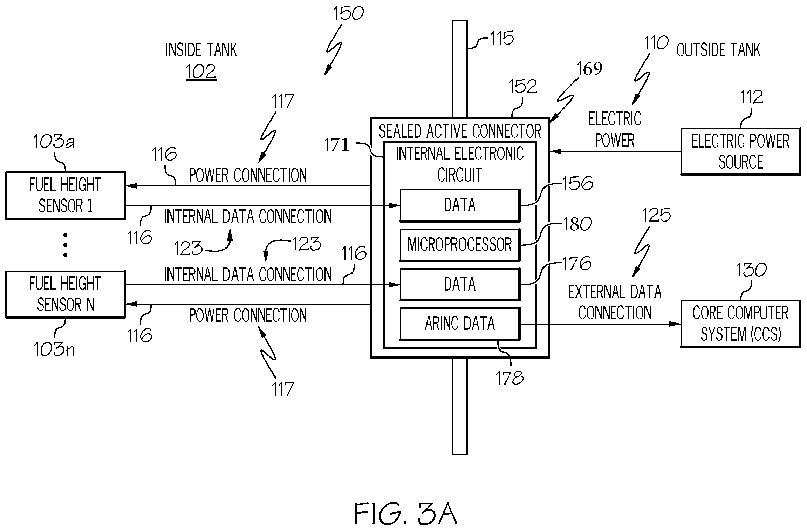

FIG. 1D is a block schematic diagram of an example of a system 150 for electric power and data communications within a fuel tank 102 and across a wall 115 of the fuel tank 102 in accordance with another example of the present invention. The system 150 is similar to the system 100 in FIG. 1A except the sealed connector 114 is replaced by a sealed active connector 167. The sealed active connector 167 includes an internal electronic circuit 171 configured to receive data 176 corresponding to the fuel height 208 (FIG. 2A-2B) measured by the fuel height sensor 103. Referring also to FIG. 3A, in accordance with another example, the internal electronic circuit 171 is configured to receive data 176 corresponding to the fuel height 208 in the fuel tank 102 from a plurality of fuel height sensors 103a-103n. In accordance with an example, the internal electronic circuit 171 is further configured to format the data 176 from the fuel height probes to Aeronautical Radio, Incorporated (ARINC) data 178.

In accordance with an example, the sealed active connector 167 includes a connector shell 169 (FIG. 3A) and the internal electronic circuit 171 includes a microprocessor 180 that is removably disposed within the connector shell 169.

The system 150 also includes an electric power connection 117 between the sealed active connector 167 and each of the fuel height sensors 103a-103n. The system 150 additionally includes an internal data communications connection 123 between each of the fuel height sensor 103a-103n and the sealed active connector 167. At least the electric power connection 117 between each fuel height sensor 103a-103n and the sealed active connector 167 includes a resistive non-metallic wire 116. In accordance with the example in FIG. 3A, the internal data communications connection 123 between each of the fuel height sensors 103a-103n and the sealed active connector 167 includes a resistive non-metallic wire 116.

The sealed active connector 167 is directly connected to a core computer system (CCS) 130 by an external data communications connection 125 outside the fuel tank 102. The external data communications connection 125 includes one of a digital data bus, Aeronautical Radio, Incorporated (ARINC) bus, or a Controller Area Network (CAN) bus or canbus. As previously described, a fuel management system 134 is embodied on the CCS 130.

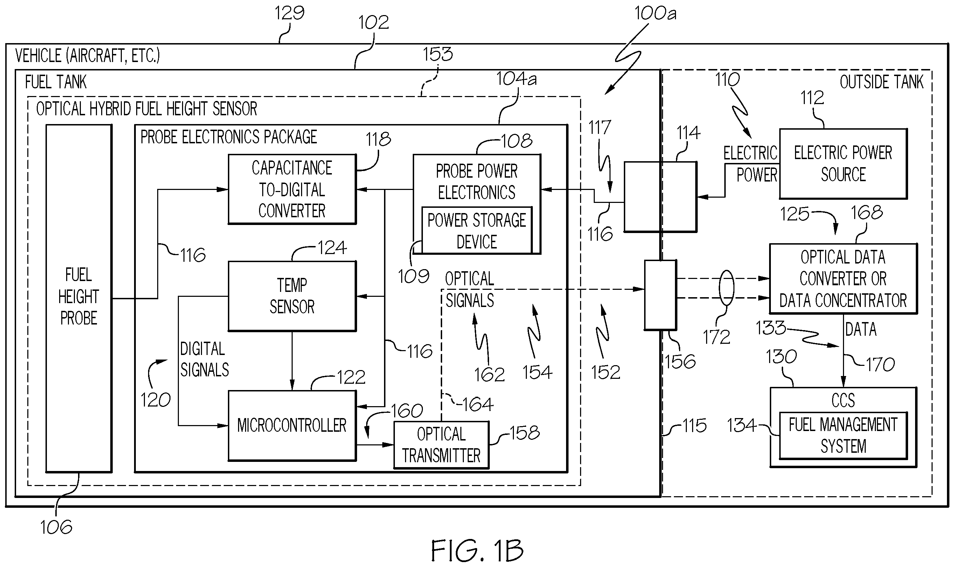

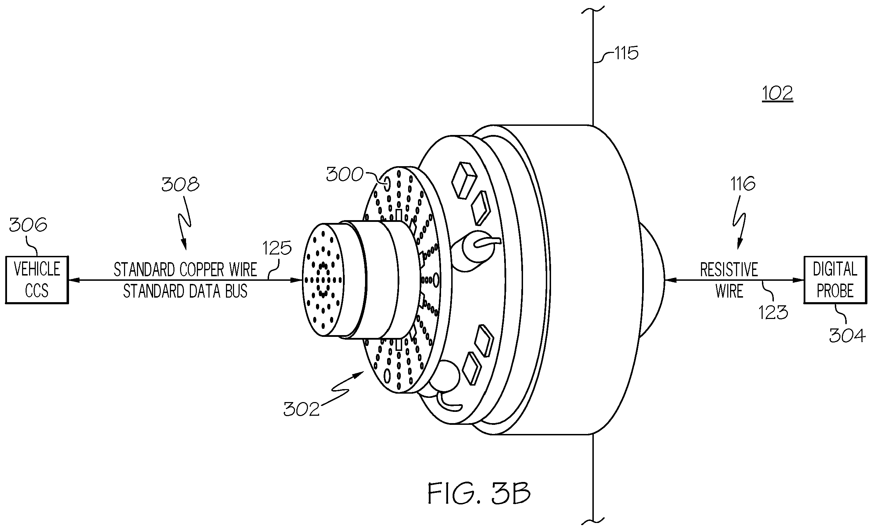

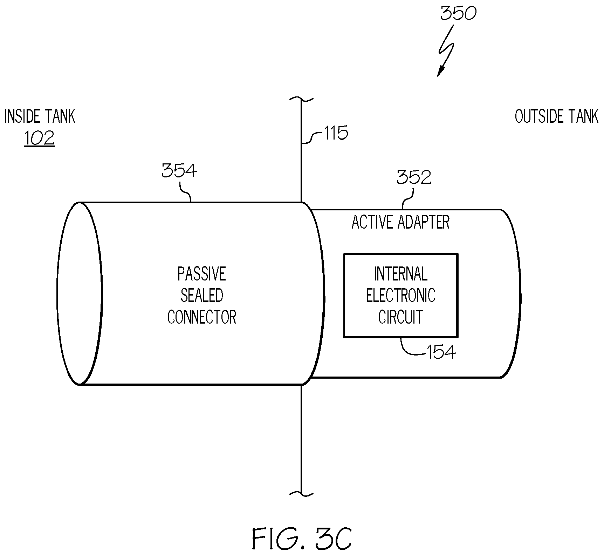

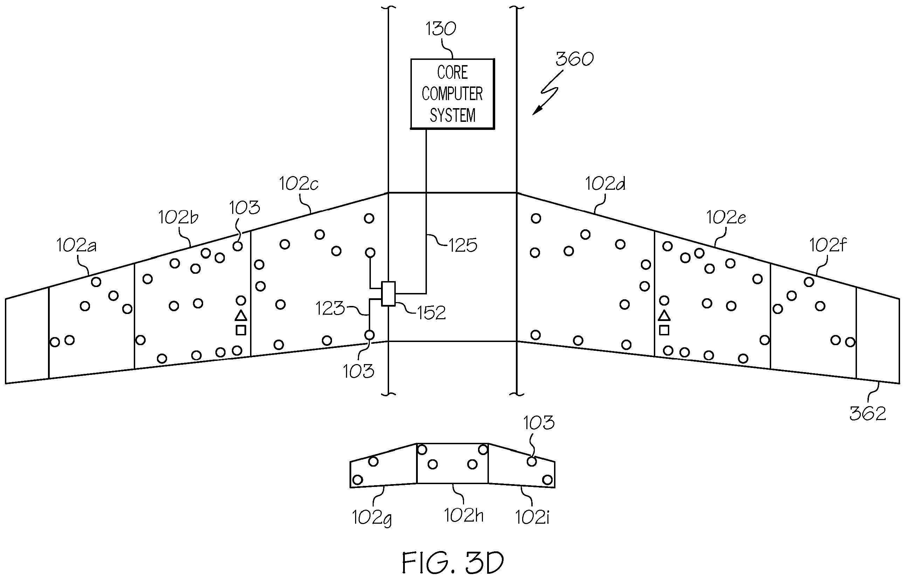

Referring also to FIG. 3B, FIG. 3B is an illustration of an example of a sealed connector 300 including an internal electronic circuit 302 in accordance with an example of the subject disclosure. In accordance with the example in FIG. 3, the sealed connector 300 can be used for the sealed active connector 167 in FIGS. 1D and 3A . The sealed connector 300 is an active sealed connector that communicates over resistive non-metallic wire 116 to one or more digital probes 304 within the fuel tank 102. Signals propagating over high resistance wire have a high source impedance and require a high impedance active receiver to translate those signals to those signals typically used on copper wiring. In accordance with an example, each digital probe 304 includes the fuel height sensor 103 in FIG. 1D and 3A. In the example in FIG. 3B, the sealed connector 300 is connected to a vehicle core computer system (CSS) 306 by an external data communications connection 125. In accordance with an example, the external data communications connection 125 uses standard copper wire data buses 308. The internal electronic circuit 302 of the sealed connector 300 reads digital data from the digital probe 304 via the resistive non-metallic wire 116. The sealed connector 300 transmits the digital data onto the data bus 308, for example, an aircraft data bus, such as a standard copper wire Aeronautical Radio, Incorporated (ARINC) bus, Controller Area Network (CAN) bus or canbus or mil-std-1553 data bus. At the digital probe 304 the changing fuel level changes the capacitance which is then read by a capacitance-to-digital converter, for example, capacitance-to-digital converter 118 in FIG. 1A and sent to a microcontroller 122. The microcontroller 122 adds the probe ID number and formats the data packet then transmits the data packet over an internal data communications connection 123 between the fuel height sensor 103 and the sealed active connector 300 or sealed active connector 167 in FIGS. 1D and 3A. The internal data communications connection 123 includes a resistive non-metallic wire 116. In accordance with an example, the active sealed connector 300 reads probe data packets from multiple digital probes 304. For example, about eight to about twelve digital probes 304 are connect to a single sealed connector 300 via resistive non-metallic wire 116. The sealed connector 300 collects the probe data from the multiple digital probes 304, formats the probe data into standard aircraft data bus packets and communicates the probe data directly to the vehicle CCS 306. At the vehicle CCS 306, the data bus packets are read so that the vehicle CCS 306 now knows the fuel height at each digital probe 304. A software program, for example fuel management system 134 in FIG. 1A, within the vehicle CCS 306 then looks at height/volume relationship tables, for example, curves of fuel probe levels vs volume, and calculates the total volume of fuel. Combining that data with a measure or estimate of fuel density provides total weight of fuel in each instrumented fuel tank 102 of the vehicle 129 or aircraft. This information is provided to and/or accessed by one or more different components of the vehicle 129 or aircraft, for example, the cockpit of an aircraft, refuel panel, diagnostics, etc. Once the CCS 306 software module has calculated total fuel weight, the total fuel weight can be transmitted to whatever application on the aircraft needs this information. FIG. 3C is a block schematic diagram of example of a sealed active connector 350 in accordance with a further example of the subject disclosure. In accordance with an example, the sealed active connector 350 is used for the sealed active connector 167 in FIGS. 1B and 3A. The sealed active connector 350 includes an active adapter 352 connected to a passive sealed connector 354 that extends through the wall 115 of the fuel tank 102. As used herein a passive sealed connector 354 or dumb connector is a connector that simply interconnects two elements and does not include any active components configured to perform a certain function, such an internal electronic circuit or microprocessor. The internal electronic circuit 171 is disposed within the active adapter 352 and the active adapter 352 is removable from the passive sealed connector 354 without removing the passive sealed connector 354 from the wall 115 of the fuel tank 102.

Referring to FIG. 3D, FIG. 3D is an illustration of a portion of an aircraft 360 including a plurality of fuel tanks 102a-102g in accordance with an example of the subject disclosure. The aircraft 360 includes one of the system 100 in FIG. 1A or the system 150 of FIG. 1B. In the example in FIG. 3D more than one fuel tank 102a-102g is mounted in a wing 362 of the aircraft 360. A plurality of fuel height sensors 103 are distributed at predetermined different locations within each fuel tank 102a-102g to accurately measure a quantity of fuel 212 within each fuel tank 102a-102g.

Referring back to FIG. 1A, the probe electronics package 104 also includes a capacitance-to-digital converter 118. The fuel height probe 106 is directly connected to the probe electronics package 104 that includes the capacitance-to-digital converter 118. The resistive non-metallic wire 116 runs from the probe electronics package 104 to the sealed connector 114. An example of the capacitance-to-digital converter 118 is an FDC1004 provided by Texas Instruments, Incorporated. The capacitance-to-digital converter 118 receives capacitance data from the fuel height probe 106 and converts the capacitance data to a digital signal 120. In the example in FIG. 1A, the probe electronics package 104 also includes a microcontroller 122 and a temperature sensor 124. The microcontroller 122 receives temperature measurements from the temperature sensor 124 and receives digital signals 120 corresponding to the fuel height 208 (FIG. 2A-2B) from the capacitance-to-digital converter 118. The temperature sensor 124 is a digital or analog temperature sensor. The temperature sensor 124 and the capacitance to digital converter 118 are connected to the microcontroller 122. The capacitance-to-digital converter 118, temperature sensor 124 and the microcontroller 122 receive electric power from the probe power electronics 108. In accordance with the example illustrated in FIG. 1A, the microcontroller 122 of the probe electronics package 104 is electrically connected to the sealed connector 114 by resistive non-metallic wire 116.

In accordance with an example, the system 100 also includes an external data communications connection 125 outside the fuel tank 102. In accordance with the example in FIG. 1A, the external data communications connection 125 includes a signal repeater/converter 126 outside the fuel tank 102. The external data communications connection 125 also includes copper wires 128 that electrically connect the signal repeater/converter 126 to the sealed connector 114. The signal repeater/converter 126 receives data signals from the microcontroller 122 containing data indicative of a quantity of fuel 212 (FIG. 2A-2B) within the fuel tank 102.

In accordance with another example, a data concentrator replaces the signal repeater/converter 126 to receive data signals from the microcontroller 122 via the sealed connector 114.

In the example in FIG. 1A, a core computer system (CCS) 130 receives digital signals 132 including fuel height data from the signal repeater/converter 126. The CCS 130 includes a fuel management system 134 configured to determine at least a quantity of fuel 212 in the fuel tank 102. In accordance with example, the signal repeater/converter 126 is a data concentrator. The data concentrator includes an output configured to transmit data based on the fuel height data received from the fuel height sensor 103 or sensors to the fuel management system 134 embodied on the core computer system 130. The core computer system 130 is configured to convey a fuel quantity indication based on the fuel height data received from the fuel height sensor 103 or sensors.

FIG. 1B is a block schematic diagram of an example of another system 100a onboard a vehicle 129 for electric power and data communications within a fuel tank 102 and across a wall 115 of the fuel tank 102 in accordance with another example of the subject disclosure. The other system 100a is the same as the system 100 in FIG. 1A except the system 100a includes an internal data communications connection 152 within the fuel tank 102 that includes an optical hybrid fuel height sensor 153 and an optical signal out connection 154 between the optical hybrid fuel height sensor 153 and a sealed optical connector 156. The sealed optical connector 156 extends through the wall 115 of the fuel tank 102.

The optical hybrid fuel height sensor 153 is similar to the fuel height sensor 103 in FIG. 1A except the optical hybrid fuel height sensor 153 includes an optical transmitter 158 in the probe electronics package 104a. The optical transmitter 158 is configured to convert fuel height electrical signals 160 from the microcontroller 122 to fuel height optical signals 162. The internal data communications connection 152 includes an optical fiber 164 between the optical transmitter 158 and the sealed optical connector 156. In accordance with the example in FIG. 1B, the sealed optical connector 156 is a dedicated sealed optical connector 156 that is separate from the sealed connector 114 and connects the internal data communications connection 152 to an external data communications connection 125.

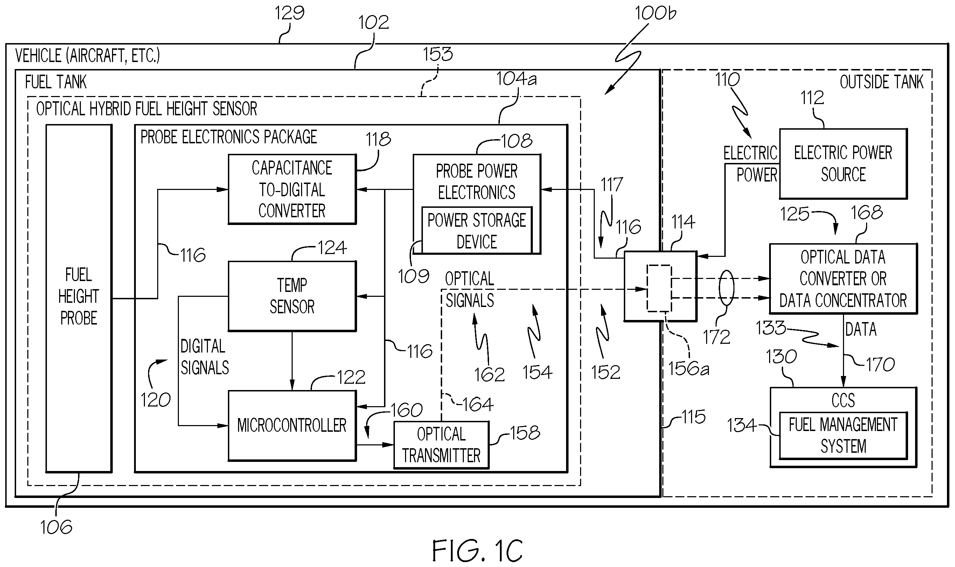

The system 100a also included an external data communications connection 125 outside the fuel tank 102 between the sealed optical connector 156 or optical connector 166 (FIG. 1C) and a core computer system (CCS) 130. As previously described, the CCS 130 includes a fuel management system 134 configured to determine at least a quantity of fuel 212 in the fuel tank 102. The external data communications connection 125 includes an optical data converter 168 connected between the sealed optical connector 156 and the CCS 130. The optical data converter 168 is configured to convert optical signals 162 to electrical digital signals 132 for transmission on a conductive metal wire 170 to the CCS 130.

In accordance with another example, the external data communications connection 125 includes a data concentrator connected between the sealed optical connector 156 and the CCS 130. Accordingly, the optical data converter 168 is replaced by a data concentrator. The data concentrator is configured to read a multitude of fiber optic signals 172 and transmit a single stream of data 133 to the CCS 130.

FIG. 1C is a block schematic diagram of an example of another system 100b for electric power and data communications within a fuel tank 102 and across a wall 115 of the fuel tank 102 in accordance with further example of the subject disclosure. The exemplary system 100b illustrated in FIG. 1C is the same as the system 100a in FIG. 1B except the sealed optical connector 156 is an optical connector 156a disposed within the sealed connector 114. The optical connector 156a connects the internal data communications connection 152 to the external data communications connection 125. In accordance with a further example, the sealed optical connector 156 includes the optical fiber 164 extending intact through the wall 115 of the fuel tank 102 and between the optical transmitter 158 and an optical data converter 168 outside the fuel tank 102. The penetration of the optical fiber 164 through the wall 115 is sealed to prevent any leakage from the tank.

FIGS. 4-11 are examples of different electric power and data communications configurations for a fuel tank 102 in accordance with different examples of the subject disclosure. In accordance with different examples, the sealed connector 114 in FIG. 1 or the sealed active connectors 167, 300 or 350 in FIGS. 1D or 3A-3C are usable in combination with any of the different electric power and data communications configurations in FIGS. 4-11. FIG. 4 is an electric power and data communications configuration 400 including an electric power connection 117 and an internal data communications connection 123, each coupled between the sealed connector 114 and the probe electronics package 104. The electric power connection 117 and the internal data communications connection 123 both include resistive non-metallic wires 116 similar to that previously described. A device 406, for example, a probe reader, computer, etc. outside the fuel tank 102 is electrically connected to the sealed connector 114 by an external data communications connection 125. In accordance with the example illustrated in FIG.4, the external data communications connection 125 includes cooper wires 408.

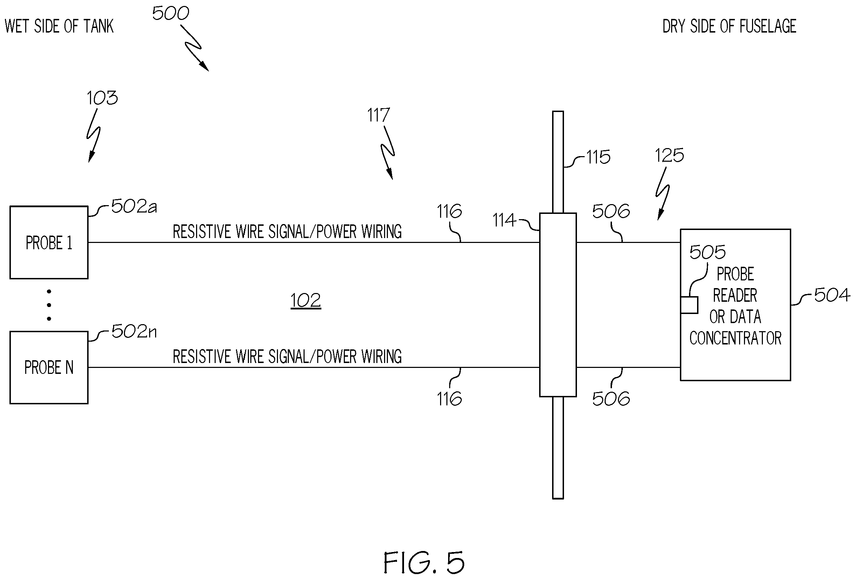

FIG. 5 illustrates an example of an electric power and data communications connection 500 including a plurality of probes 502a-502n within a fuel tank 102. In accordance with an example, each of the plurality of probes 502a-502n is a fuel height sensor 103 similar to that described with reference to FIG. 1A. Each of the probes 502a and 502n are connected to a sealed connector 114 by a resistive non-metallic wire 116 for both electric power and data communications within the fuel tank 102. In accordance with an example, a probe reader 504 receives data signals from the probes 502a-502n via the sealed connector 114. In another example, the probe reader 504 is replaced by a data concentrator suitable for receiving high source impedance signals. The data concentrator includes an interface 505 configured to receive data from a system, such as system 100 for electric power and data communications within a fuel tank 102 and across a wall 115 of the fuel tank 102. The probe reader 504 or data concentrator is electrically connected to the sealed connector 114 by an external data communications connection 125. In accordance with an example, the external data communications connection 125 includes copper wires 506.

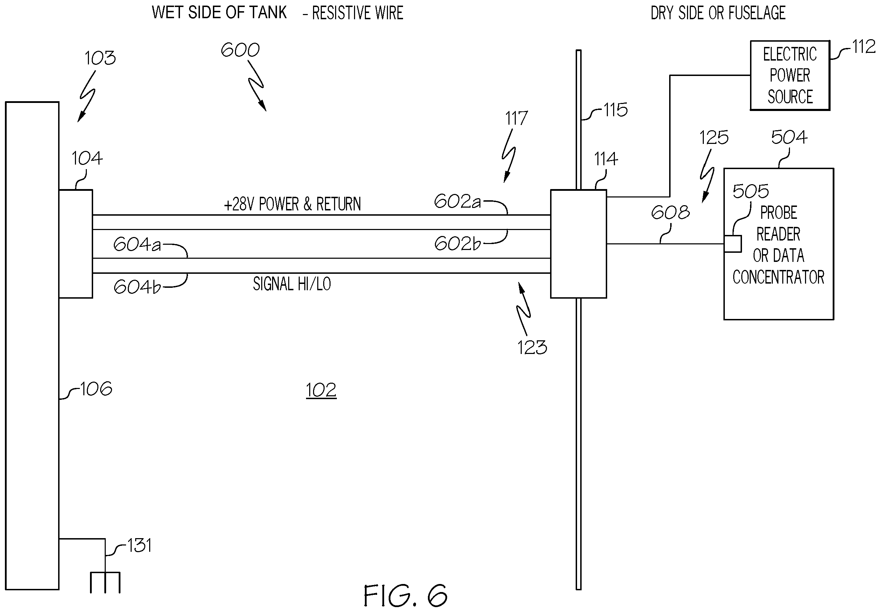

FIG. 6 illustrates an example of a four wire architecture 600 including a fuel height probe 106 with a local electric ground connection 131. An electric power connection 117 within the fuel tank 102 includes a power resistive non-metallic wire 602a and a return power resistive non-metallic wire 602b connecting the probe electronics package 104 to the sealed connector 114. The power resistive non-metallic wire 602a and the return power resistive non-metallic wire 602b define a two-wire electric power connection 602a and 602b An internal data communications connection 123 within the fuel tank 102 includes a signal Hi resistive non-metallic wire 604a and a signal Lo resistive non-metallic wire 604b connecting the probe electronics package 104 to the sealed connector 114. The resistive non-metallic wires 602a, 602b, 604a and 604b are the same as resistive non-metallic wires 116 in FIG. 1A. The sealed connector 114 is electrically connected to a probe reader 504 by an external data communications connection 125. In accordance with an example, the external data communications connection 125 includes a copper bundle 608. In another example, the probe reader 504 is replaced by a data concentrator.

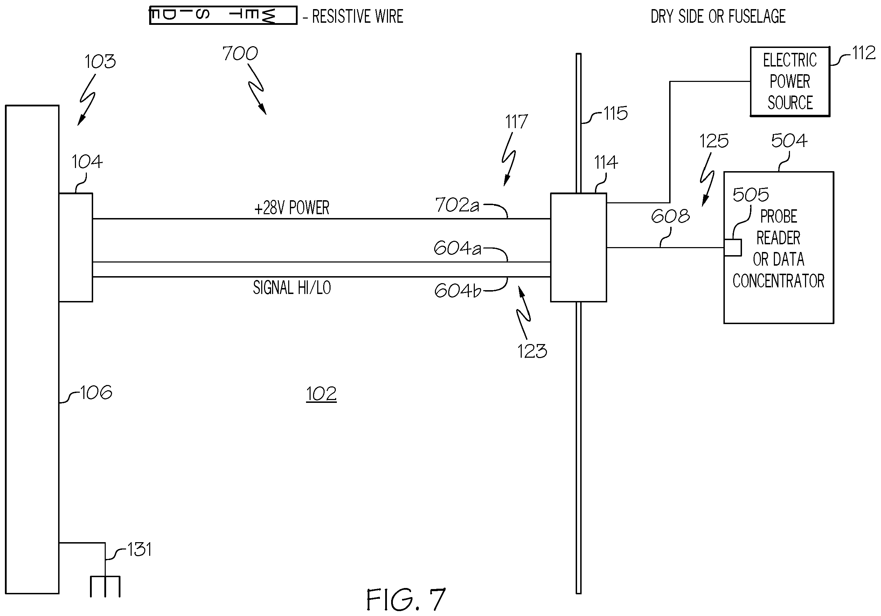

FIG. 7 illustrates an example of a four wire architecture 700 including a fuel height probe 106 with a local electric ground connection 131 and local power return. The local electric ground connection 131 provides an electric current return path via a structural ground rather than a wire return path as illustrated in the example in FIG. 6. An electric power connection 117 within the fuel tank 102 includes a single power resistive non-metallic wire 702a connecting the probe electronics package 104 to the sealed connector 114. An internal data communications connection 123 within the fuel tank 102 includes a signal Hi resistive non-metallic wire 604a and a signal Lo resistive non-metallic wire 604b connecting the probe electronics package 104 to the sealed connector 114. The resistive non-metallic wires 702a, 604a and 604b are the same as resistive non-metallic wires 116 in FIG. 1A. The sealed connector 114 is electrically connected to a probe reader 504 outside the fuel tank 102 by an external data communications connection 125. In accordance with an example, the external data communications connection 125 includes a copper bundle 608. In another example, the probe reader 504 is replaced by a data concentrator.

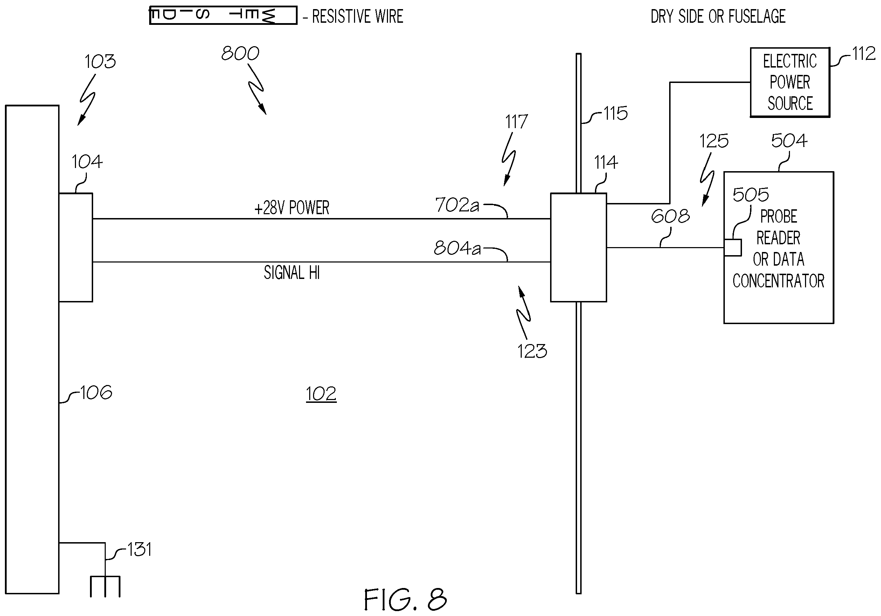

FIG. 8 illustrates an example of a four wire architecture 800 including a fuel height probe 106 with a local electric ground connection 131, a local power return and a local data signal return. An electric power connection 117 within the fuel tank 102 includes a single power resistive non-metallic wire 702a connecting the probe electronics package 104 to the sealed connector 114. An internal data communications connection 123 within the fuel tank 102 includes a single signal Hi resistive non-metallic wire 804a connecting the probe electronics package 104 to the sealed connector 114. The resistive non-metallic wires 702a and 804a are the same as resistive non-metallic wires 116 in FIG. 1A. The sealed connector 114 is electrically connected to a probe reader 504 outside the fuel tank 102 by an external data communications connection 125. In accordance with an example, the external data communications connection 125 includes a copper bundle 608. In another example, the probe reader 504 is replaced by a data concentrator.

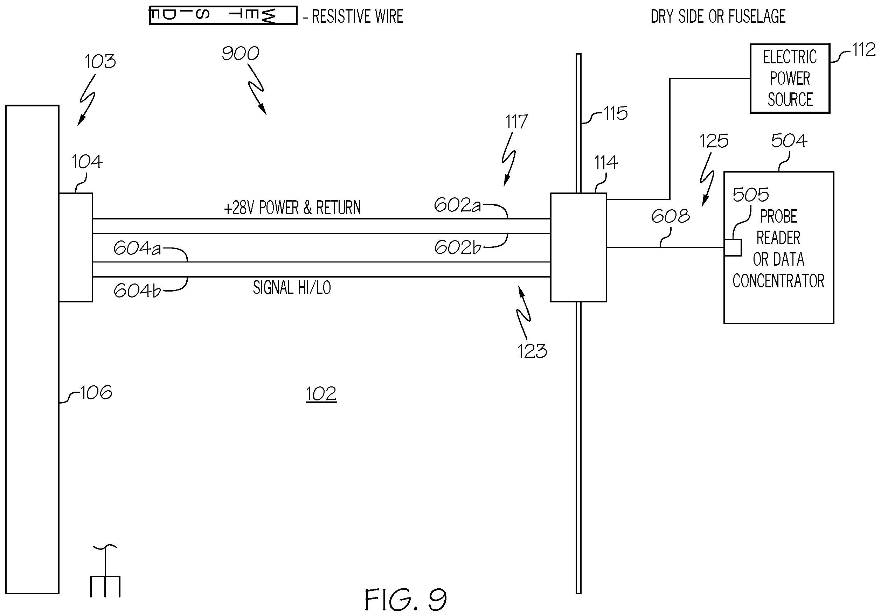

FIG. 9 illustrates an example of a four wire architecture 900 including a floating fuel height probe 106, i.e., the fuel height probe 106 is not grounded. An electric power connection 117 within the fuel tank 102 includes a power resistive non-metallic wire 602a and a return power resistive non-metallic wire 602b connecting the probe electronics package 104 to the sealed connector 114. An internal data communications connection 123 within the fuel tank 102 includes a signal Hi resistive non-metallic wire 604a and a signal Lo resistive non-metallic wire 604b connecting the probe electronics package 104 to the sealed connector 114. The resistive non-metallic wires 602a, 602b, 604a and 604b are the same as resistive non-metallic wires 116 in FIG. 1A. The sealed connector 114 is electrically connected to a probe reader 504 by an external data communications connection 125. In accordance with an example, the external data communications connection 125 includes a copper bundle 608. In another example, the probe reader 504 is replaced by a data concentrator.

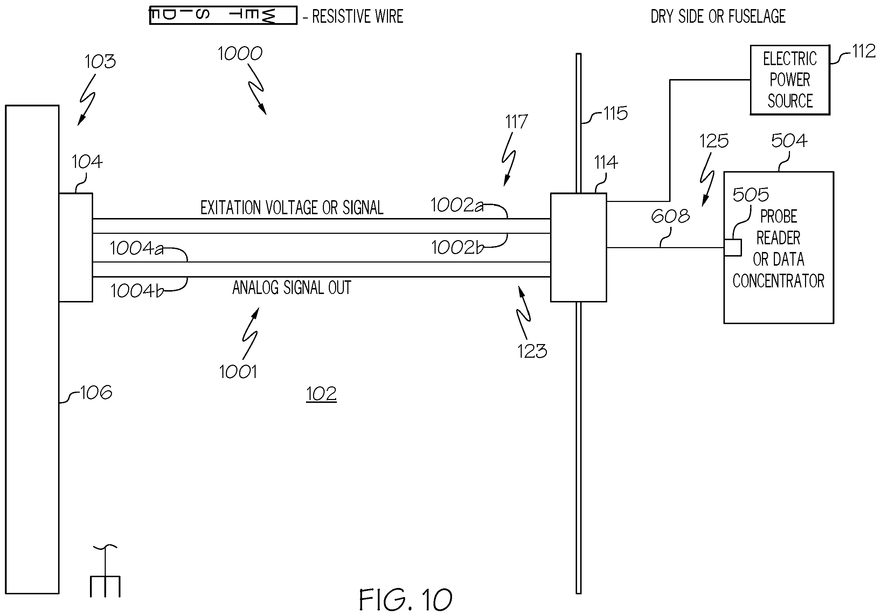

FIG. 10 illustrates an example of a four wire architecture 1000 including an analog signal out connection 1001 and a floating fuel height probe 106, i.e., the probe 106 is not grounded. An electric power connection 117 within the fuel tank 102 includes an excitation voltage resistive non-metallic wire 1002a and a return resistive non-metallic wire 1002b connecting the probe electronics package 104 to the sealed connector 114. An internal data communications connection 123 within the fuel tank 102 includes a pair of analog signal out resistive non-metallic wires 1004a and 1004b connecting the probe electronics package 104 to the sealed connector 114. The resistive non-metallic wires 1002a, 1002b, 1004a and 1004b are the same as resistive non-metallic wires 116 in FIG. 1A. The internal data communications connection 123 includes the analog signal out connection 1001. The sealed connector 114 is electrically connected to a probe reader 504 by an external data communications connection 125. In accordance with an example, the external data communications connection 125 includes a copper bundle 608. In another example, the probe reader 504 is replaced by a data concentrator.

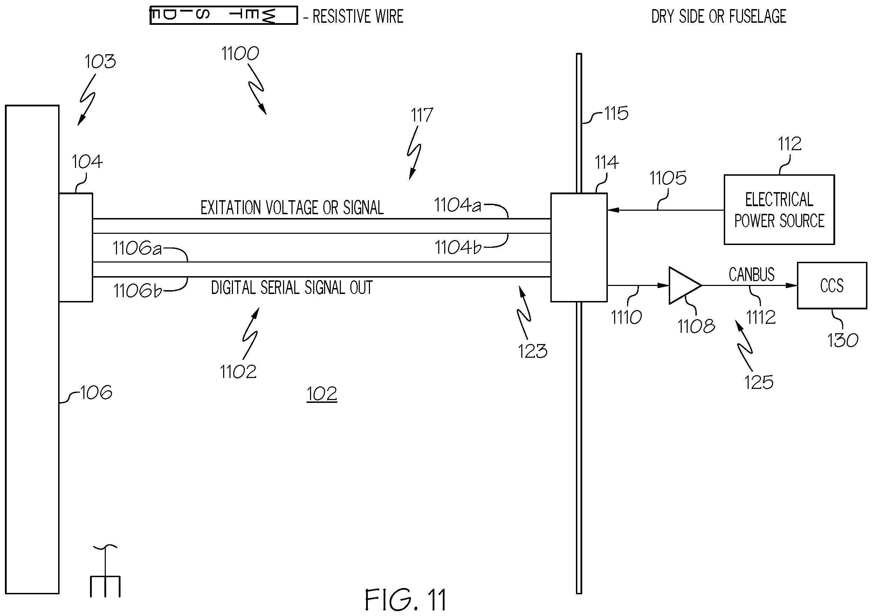

FIG. 11 illustrates an example of a four wire architecture 1100 including a digital signal out connection 1102 from the probe electronics package 104 and a floating fuel height probe 106 (no ground). In accordance with the example illustrated in FIG. 11, an electric power connection 117 within the fuel tank 102 includes an excitation voltage resistive non-metallic wire 1104a and a return resistive non-metallic wire 1104b connecting the probe electronics package 104 to the sealed connector 114. An electric power source 112 outside the fuel tank 102 is connected to the sealed connector 114 by a copper wire 1105. An internal data communications connection 123 within the fuel tank 102 includes a pair of digital signal out resistive non-metallic wires 1106a and 1106b. The resistive non-metallic wires 1104a, 1104b, 1106a and 1106b are the same as resistive non-metallic wires 116 in FIG. 1A. The internal data communications connection 123 includes the digital signal out connection 1102. An external data communications connection 125 electrically connects the sealed connector 114 to a CCS 130. In the example illustrated in FIG. 11, the external data communications connection 125 includes a canbus 1112, digital data bus or ARINC bus. The sealed connector 114 transmits the digital signal out 1102 to an amplifier 1108 outside the fuel tank 102 via a copper wire 1110. In accordance with another example, the amplifier 1108 is replaced by a canbus buffer. The digital signal out 1102 is transmitted from the canbus buffer or amplifier 1108 by a canbus 1112, digital data bus or ARINC bus to the CCS 130.

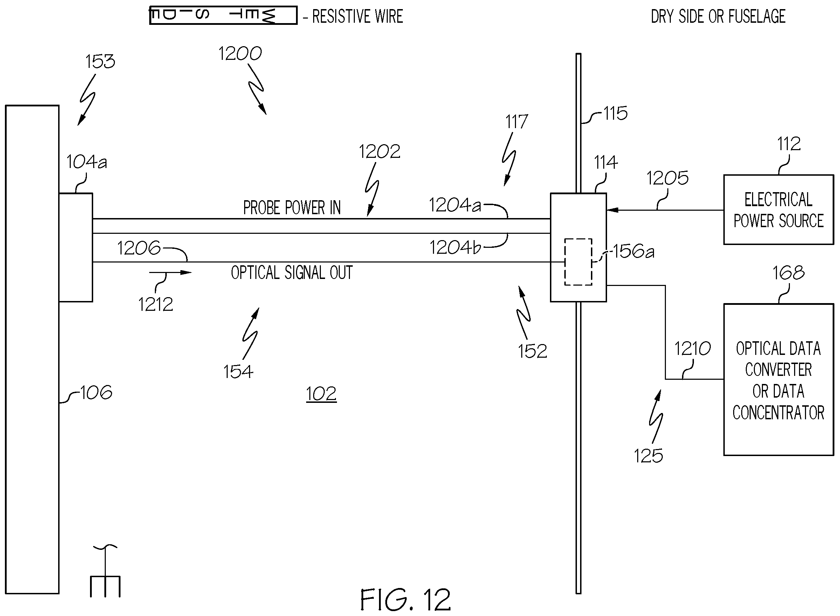

FIG. 12 is an example of an electrical power and data communications configuration 1200 within a fuel tank 102 including an optical hybrid fuel height sensor 153 and optical signal out connection 154, as described with reference to FIGS. 1B and 1C. The electrical power and data communications configuration 1200 includes a four wire architecture 1202 including a combination optical and resistive communications connection configuration and floating fuel height probe 106, i.e., the fuel height probe 106 is not connected to ground as illustrated in FIG. 12. In accordance with an exemplary example, the system 100a in FIG. 1B includes the electrical power and data communications configuration 1200 in FIG. 12. In accordance with another example, the system 100b in FIG. 1C includes the electric power and data communications configuration 1200 in FIG. 12. In accordance with the example illustrated in FIG. 12, an electric power connection 117 in the fuel tank 102 includes a probe power in resistive non-metallic wire 1204a and a return power resistive non-metallic wire 1204b connecting the probe electronics package 104a to the sealed connector 114. An electric power source 112 outside the fuel tank 102 is connected to the sealed connector 114 by a copper wire 1205. An internal data communications connection 152 within the fuel tank 102 includes an optical signal out connection 154 (fiber optic cable connection) that transmits a light emitting diode (LED) signal 1212 to the optical connector 156a within the sealed connector 114 or to the dedicated sealed optical connector 156 in the exemplary example in FIG. 1B. The optical connector 156a within the sealed connector 114 or sealed optical connector 156 (FIG. 1B) is connected to an optical data converter 168 outside the fuel tank 102 by an external data communications connection 125. In accordance with an example, the external data communications connection 125 includes a fiber optic cable 1210. In accordance with another example, the optical data converter 168 is replaced by a data concentrator.

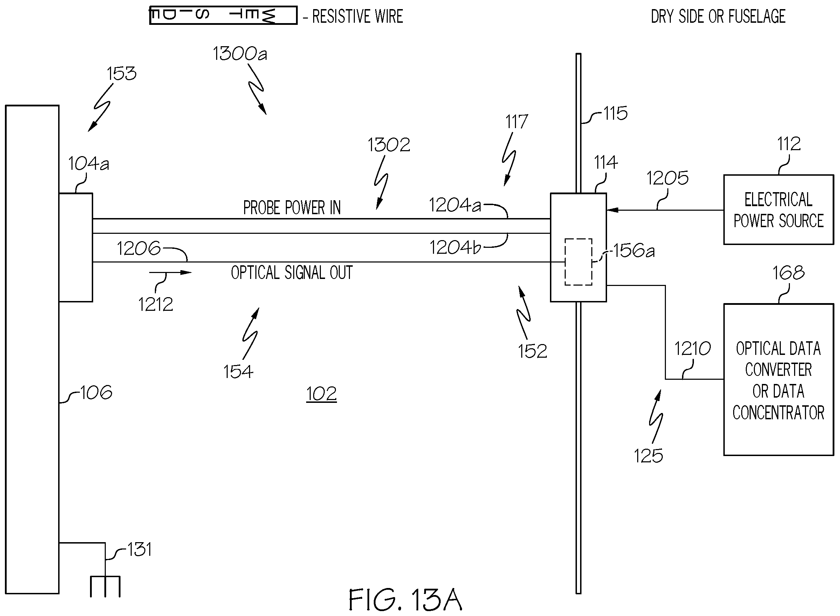

FIG. 13A is an example of an electric power and data communications configuration 1300a within a fuel tank 102 including an optical hybrid fuel height sensor 153 and optical signal out connection 154 in accordance with an example of the subject disclosure. The electric power and data communications configuration 1300a includes a four wire architecture 1302 including a combination resistive non-metallic electric power connection 117, optical signal out connection 154 and a fuel height probe 106 with a local electric ground connection 131. In accordance with an exemplary example, the system 100a in FIG. 1B includes the electric power and data communications configuration 1300a in FIG. 13A. In accordance with another example, the system 100b in FIG. 1C includes the electric power and data communications configuration 1300a in FIG. 13A. In accordance with the example illustrated in FIG. 13A, an electric power connection 117 within the fuel tank 102 includes a probe power in resistive non-metallic wire 1204a and a return power resistive non-metallic wire 1204b connecting the probe electronics package 104a to the sealed connector 114. An electric power source 112 outside the fuel tank 102 is connected to the sealed connector 114 by a copper wire 1205. An internal data communications connection 152 within the fuel tank 102 includes an optical signal out connection 154 (fiber optic cable connection) that transmits a light emitting diode (LED) signal 1212 to the optical connector 156a within the sealed connector 114 or to dedicated sealed optical connector 156 (FIG. 1B). The optical connector 156a within the sealed connector 114 is connected to an optical data converter 168 outside the fuel tank 102 by an external data communications connection 125. The external data communications connection 125 includes a fiber optic cable 1210 in accordance with an example. In another example, the optical data converter 168 is replaced a data concentrator.

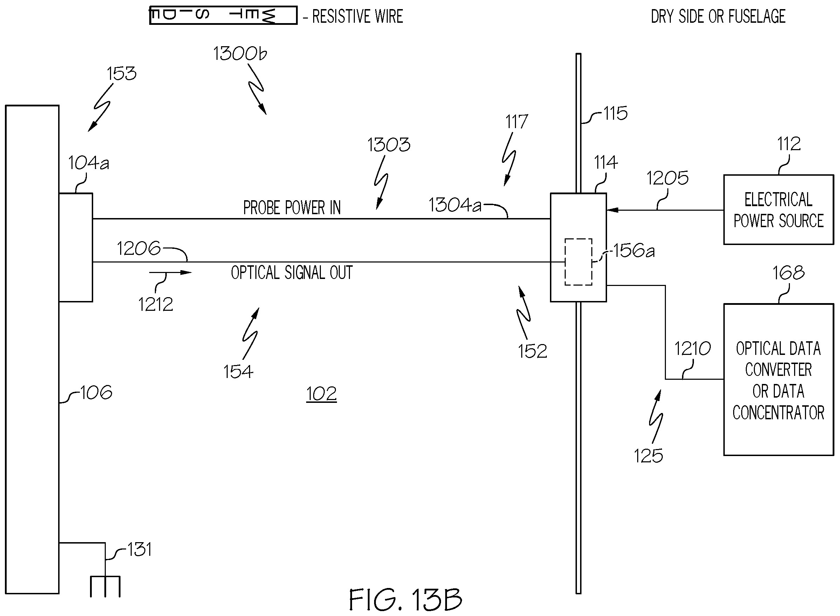

FIG. 13B is an example of an electric power and data communications configuration 1300b within a fuel tank 102 including an optical hybrid fuel height sensor 153 and optical signal out connection 154 in accordance with a further example of the subject disclosure. The electric power and data communications configuration 1300b includes a four wire architecture 1303 including a combination resistive non-metallic electric power connection 117 and optical signal out connection 154 and a fuel height probe 106 with a local electric ground connection 131. The electric power connection 117 and optical signal out connection 154 are similar to FIG. 13A except the local electric ground connection 131 provides an electric current return path via a structural ground rather than a wire return path as illustrated in the example in FIG. 13A.

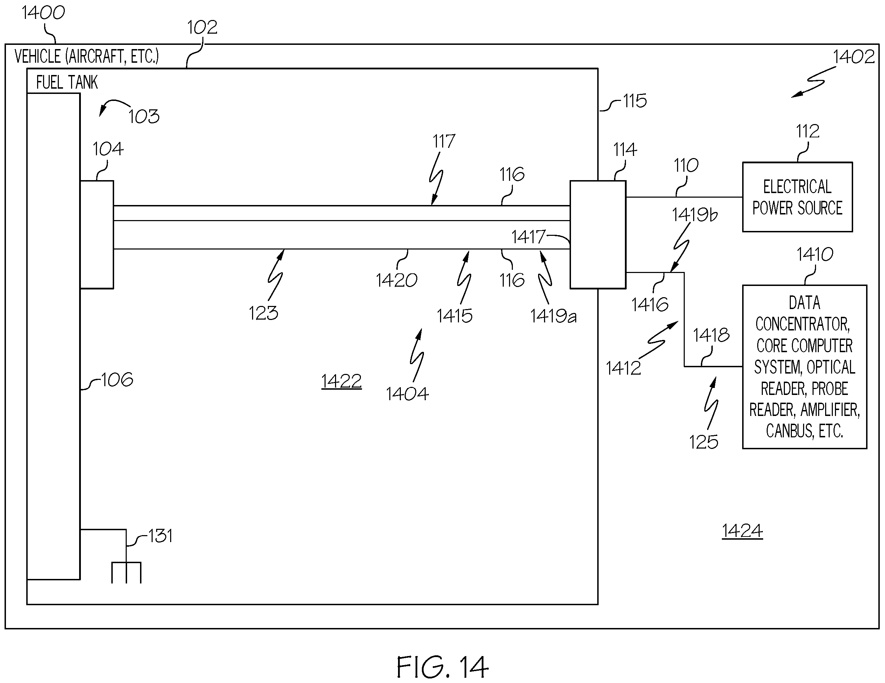

FIG. 14 is an example of a vehicle 1400 including a system 1402 for power and data communications within a fuel tank 102 and across a wall 115 of the fuel tank 102 in accordance with an example of the subject disclosure. In accordance with one or more examples, the system 1402 for power and data communications is the same or similar to the exemplary system 100 in FIG. 1A, 110a in FIG. 1B, 110b in FIG 1C, and/or 150 in FIG. 1D, and includes any of the different examples described with reference to FIGS. 1-13. In accordance with an example, the vehicle 1400 is an aircraft. The vehicle 1400 includes a fuel tank 102. The fuel tank 102 includes a power and data communications systems 1404. The power and data communications system 1404 includes a fuel height probe 106 and a sealed connector 114 extending through a wall 115 of the fuel tank 102. The sealed connector 114 includes an internal electronic circuit 302 (FIG. 3). The power and data communications system 1404 also includes an electric power connection 117 between the fuel height probe 106 and the sealed connector 114. The power and data communications system 1404 additionally includes an internal data communications connection 123 between the probe electronics package 104 of the fuel height sensor 103 and the sealed connector 114. At least the electric power connection 117 between the probe electronics package 104 and the sealed connector 114 includes a resistive non-metallic wire 116.

The vehicle 1400 also includes a device 1410 outside the fuel tank 102. The devices 1410 is at least one of a data concentrator, a core computer system, an optical reader, a probe reader, an amplifier, or a canbus. The device 1410 is connected to the sealed connector 114 by an external data communications connection 125. In accordance with another example, the device 1410 includes a data connection 1412 between the sealed connector 114 and the device 1410.

The device 1410 or data concentrator is communicatively coupled to the fuel height sensor 103 through a resistive non-metallic wire 116 on at least one portion 1415 of a communications link 1416 between the fuel height sensor 103 and the sealed connector 114. An input 1417 of the sealed connector 114 is configured to receive data from the fuel height sensor 103 over the resistive non-metallic wire 116 on the at least one portion 1415 of the of the communications link 1416. The resistive non-metallic wire 116 is internal to the fuel tank 102.

In accordance with an example, the device 1410 or data concentrator is communicatively coupled to the fuel height probe 106 through a first wire 1418 and a second wire 1420, wherein the first wire 1418 and the second wire 1420 have different electrical properties. The first wire 1418 and the second wire 1420 are each in a different environment. One environment is a wet environment 1422 and the other environment is a dry environment 1424.

In accordance with an example, the device 1410 or data concentrator is communicatively coupled to the fuel height probe 106 over a communications link 1416 that includes two or more segments 1419, wherein a first segment 1419a is over a resistive non-metallic wire and a second segment 1419b is over a metallic wire.

In accordance with an example, the device 1410 or data concentrator further includes an output configured to transmit data based on the data received from the fuel height sensor 103 to a fuel management system 134 embodied on a core computer system, such as core computer system (CCS) 130 in FIGs. 1A-1D, configured to convey a fuel quantity indication based on the data received from the fuel height sensor 103.

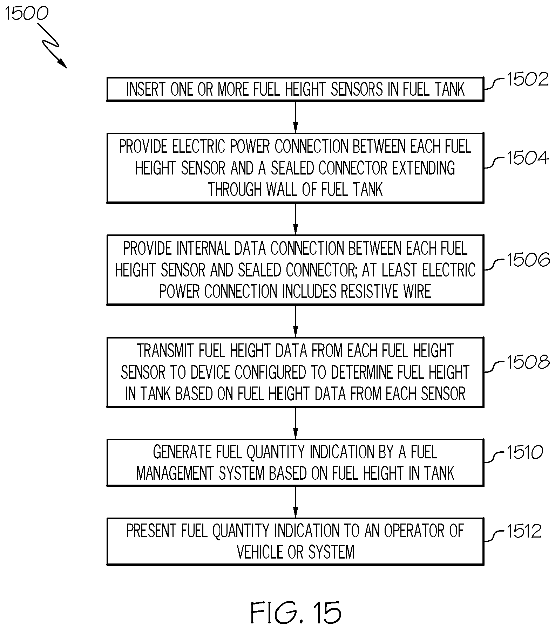

FIG. 15 is a flow chart of an example of a method 1500 for monitoring a quantity of fuel in a fuel tank 102 in accordance with an example of the subject disclosure. In block 1502, one or more fuel height sensors are inserted into a fuel tank 102. In accordance with an example, the fuel height sensors are similar to the fuel height sensors 103 described with reference to FIG. 1A and 1D. In accordance with another example, the fuel height sensors 103 are replaced by optical hybrid fuel height sensors 153 in FIG. 1B or FIG. 1C.

In block 1504, an electric power connection 117 is provided between each fuel height sensor 103 and a sealed connector 114 extending through a wall 115 of the fuel tank 102. The electric power connection 117 includes any of the electric power connections previously described and the sealed connector 114 is similar to sealed connector 114.

In block 1506, an internal data communications connection 123 is provided between each fuel height sensor 103 and the sealed connector 114. The internal data communications connection 123 includes any of the internal data communications connection 123 examples previously described.

In block 1508, fuel height data is transmitted from each fuel height sensor 103 to a device configured to determine the fuel height in the fuel tank based on the fuel height data from each fuel height sensor. In accordance with an example, the device incudes a fuel management system 134 embodied on a CCS 130.

In block 1510, a fuel quantity indication is generated by the fuel management system 134 based on the fuel height in the fuel tank 102. In block 1512, the fuel quantity indication is presented to an operator of the vehicle 129 or system, for example, via most any human-machine interface (HMI).

Although the above examples have been described with respect to an aircraft, the examples and features described herein are not limited to an aircraft and can be implemented in other vehicles, such as land vehicles and watercraft.

The flowchart and block diagrams in the Figures illustrate the architecture, functionality, and operation of possible implementations of systems, methods, and computer program products according to various examples of the subject disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular examples only and is not intended to be limiting of examples of the disclosure. As used herein, the singular forms "a", "an" and "the" are intended to include the plural forms as well, unless the context clearly indicates otherwise. It will be further understood that the terms "include," "includes," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed. The description of the present examples has been presented for purposes of illustration and description, but is not intended to be exhaustive or limited to examples in the form disclosed. Many modifications and variations will be apparent to those of ordinary skill in the art without departing from the scope of examples Although specific examples have been illustrated and described herein, those of ordinary skill in the art appreciate that any arrangement which is calculated to achieve the same purpose may be substituted for the specific examples shown and that the examples have other applications in other environments. This application is intended to cover any adaptations or variations.

## Claims

1. A system (100), comprising:
a fuel height sensor (103);
a sealed connector (114) extending through a wall (115) of a fuel tank (102);
an electric power connection (117) between the fuel height sensor (103) and the sealed connector (114); and
an internal data communications connection (123) between the fuel height sensor (103) and the sealed connector (114), wherein at least the electric power connection (117) between the fuel height sensor (103) and the sealed connector (114) comprises a resistive non-metallic wire (116),
wherein the sealed connector (114) comprises an internal electronic circuit (171).

2. The system (100) of claim 1, wherein the resistive non-metallic wire (116) comprises one of a carbon loaded thermoplastic, a carbon loaded polyether ether ketone (PEEK) thermoplastic, a wire having a resistance between about 100 ohms/meter and about 1 Mohms/meter.

3. The system (100) of claim 1 or 2, wherein the internal data communications connection (123) comprises a resistive non-metallic wire (116), and wherein the internal data communications connection (123) comprises at least one of a signal hi resistive non-metallic wire (604a) and a signal lo resistive non-metallic wire (604b), an analog signal out connection (1001), a digital signal out connection (1102), or an optical signal out connection (1206).

4. The system (100) of any one of claims 1-3, further comprising an external data communications connection (125) outside the fuel tank (102) between the sealed connector (114) and an optical data converter (1208) or data concentrator.

5. The system (100) of any one of claims 1-3, further comprising an external data communications connection (125) outside the fuel tank (102) between the sealed connector (114) and one of a probe reader (504), a data concentrator, or a core computer system (CCS) (130).

6. The system (100) of claim 5, wherein the external data communications connection (125) outside the fuel tank (102) comprises a digital data bus, Aeronautical Radio, Incorporated (ARINC) bus, or a Controller Area Network (CAN) bus (1112).

7. The system (100) of any one of claims 1-6, wherein the fuel height sensor (103) comprises one of a first fuel height probe (106) that comprises a local electric ground connection (131) or a floating fuel height probe (106) without an electric ground connection.

8. A vehicle (129), comprising:
a fuel tank (102);
a power and data communications system (100) within the fuel tank (102), wherein the system (100) is according to any of claims 1-7.

9. The vehicle (129) of claim 8, further comprising an external data communications connection (125) between the sealed connector (114) and at least one of a core computer system (130), an optical reader (504), a probe reader (504), an amplifier, or a digital data bus, Aeronautical Radio, Incorporated (ARINC) bus, or a Controller Area Network (CAN) bus (1112) connected to the sealed connector (114).

10. The vehicle (129) of any of claims 8-9, further comprising:
a data concentrator (504) communicatively coupled to the fuel height sensor (103) through a resistive non-metallic wire (116) on at least one portion (1415) of a link (1416) between the data concentrator (1410) and the fuel height sensor (103); and
an input (1417) of the sealed connector (114) configured to receive data from the fuel height sensor (103) over the resistive non-metallic wire (116) on the at least one portion (1415) of the of the link (1416) between the data concentrator (1410) and the fuel height sensor (103), and optionally wherein the resistive non-metallic wire (116) is internal to the fuel tank (102).

11. The vehicle (129) of any of claims 8-9, further comprising a data concentrator (1410) communicatively coupled to the fuel height sensor (103) through a first wire (1418) and a second wire (1420), wherein at least one of the first wire (1418) and the second wire (1420) have different electrical properties or are each in a different environment, one environment being a wet environment (1422) and the other environment being a dry environment (1424).

12. The vehicle (129) of any of claims 8-9, further comprising a data concentrator (1410) communicatively coupled to the fuel height sensor (103) over a communications link (1416) comprising two or more segments (1419a and 1419b), wherein a first segment (1419a) is over a resistive non-metallic wire (116), and optionally wherein the data concentrator (1410) further comprises an output configured to transmit data based on fuel height (208) data received from the fuel height sensor (103) to a fuel management system (134) embodied on a core computer system (130) configured to convey a fuel quantity indication based on the fuel height (208) data received from a fuel height probe (106).

13. A method (1500), comprising:
inserting (1502) one or more fuel height sensors (103) in the fuel tank (102);
providing (1504) an electric power connection (117) between each fuel height sensor (103) and a sealed connector (114) extending through a wall (115) of the fuel tank (102); and
providing (1506) an internal data communications connection (123) between each fuel height sensor (103) and the sealed connector (114), wherein at least the electric power connection (117) comprises a resistive non-metallic wire (116) and the sealed connector (114) comprises an internal electronic circuit (171).

14. A data concentrator (1410), comprising
an interface (505) configured to receive data from a system (100) for electric power and data communications within a fuel tank (102) and across a wall (115) of the fuel tank (102), wherein the system is according to claim 6.

## Patentansprüche

1. System (100), das aufweist:
einen Kraftstoffhöhensensor (103);
einen abgedichteten Verbinder (114), der sich durch eine Wand (115) eines Kraftstoffbehälters (102) erstreckt;
eine elektrische Stromverbindung (117) zwischen dem Kraftstoffhöhensensor (103) und dem abgedichteten Verbinder (114); und
eine interne Datenkommunikationsverbindung (123) zwischen dem Kraftstoffhöhensensor (103) und dem abgedichteten Verbinder (114), wobei zumindest die elektrische Stromverbindung (117) zwischen dem Kraftstoffhöhensensor (103) und dem abgedichteten Verbinder (114) einen nichtmetallischen Widerstandsdraht (116) aufweist,
wobei der abgedichtete Verbinder (114) eine interne elektronische Schaltung (171) aufweist.

2. System (100) nach Anspruch 1, wobei der nichtmetallische Widerstandsdraht (116) einen kohlenstoffbeladenen Thermoplasten, einen kohlenstoffbeladenen Polyetheretherketon (PEEK)-Thermoplasten oder einen Draht mit einem Widerstandswert zwischen etwa 100 Ohm/Meter und etwa 1 Mohms/Meter aufweist.

3. System (100) nach Anspruch 1 oder 2, wobei die interne Datenkommunikationsverbindung (123) einen nicht-metallischen Widerstandsdraht (116) aufweist, und wobei die interne Datenkommunikationsverbindung (123) zumindest einen von einem signalhohen nicht-metallischen Widerstandsdraht (604a) und einem signalniedrigen nicht-metallischen Widerstandsdraht (604b), eine analoge Signalausgangsverbindung (1001), eine digitale Signalausgangsverbindung (1102) oder eine optische Signalausgangsverbindung (1206) aufweist.

4. System (100) nach einem der Ansprüche 1 bis 3, des Weiteren mit einer externe Datenkommunikationsverbindung (125) außerhalb des Kraftstoffbehälters (102) zwischen dem abgedichteten Verbinder (114) und einem optischen Datenwandler (1208) oder Datenkonzentrator auf.

5. System (100) nach einem der Ansprüche 1 bis 3, des Weiteren mit einer externen Datenkommunikationsverbindung (125) außerhalb des Kraftstoffbehälters (102) zwischen dem abgedichteten Verbinder (114) und einem Sondenlesegerät (504), einem Datenkonzentrator oder einem Kerncomputersystem (CCS) (130) auf.

6. System (100) nach Anspruch 5, wobei die externe Datenkommunikationsverbindung (125) außerhalb des Kraftstoffbehälters (102) einen digitalen Daten-Bus, einen Aeronautical Radio, Incorporated (ARINC) Bus oder einen Controller Area Network (CAN) Bus (1112) aufweist.

7. System (100) nach einem der Ansprüche 1 bis 6, wobei der Kraftstoffhöhensensor (103) entweder eine erste Sonde (106) für die Kraftstoffhöhe aufweist, die eine lokale elektrische Masseverbindung (131) aufweist, oder eine schwimmende Sonde (106) für die Kraftstoffhöhe ohne eine elektrische Masseverbindung.

8. Fahrzeug (129), das aufweist:
einem Kraftstoffbehälter (102);
ein Energie- und Datenkommunikationssystem (100) innerhalb des Kraftstoffbehälters (102),
wobei das System (100) eines nach einem der Ansprüche 1-7 ist.

9. Fahrzeug (129) nach Anspruch 8, des Weiteren mit einer externen Datenkommunikationsverbindung (125) zwischen dem abgedichteten Verbinder (114) und zumindest einem von einem Kerncomputersystem (130), einem optischen Lesegerät (504), einem Sondenlesegerät (504), einem Verstärker oder einem digitalen Daten-Bus, einem Aeronautical Radio, Incorporated (ARINC)-Bus oder einem Controller Area Network (CAN)-Bus (1112) auf, der mit dem abgedichteten Verbinder (114) verbunden ist.

10. Fahrzeug (129) nach einem der Ansprüche 8-9, des Weiteren mit:
einen Datenkonzentrator (504), der über einen nichtmetallischen Widerstandsdraht (116) auf zumindest einem Abschnitt (1415) einer Verbindung (1416) zwischen dem Datenkonzentrator (1410) und dem Kraftstoffhöhensensor (103) kommunikativ mit dem Kraftstoffhöhensensor (103) gekoppelt ist; und
einen Eingang (1417) des abgedichteten Verbinders (114), der so ausgebildet ist, dass er Daten von dem Kraftstoffhöhensensor (103) über den widerstandsgebundenen nichtmetallischen Draht (116) auf dem zumindest einen Abschnitt (1415) der Verbindung (1416) zwischen dem Datenkonzentrator (1410) und dem Kraftstoffhöhensensor (103) aufnimmt, und optional wobei sich der widerstandsgebundene nichtmetallische Draht (116) innerhalb des Kraftstoffbehälters (102) befindet.

11. Fahrzeug (129) nach einem der Ansprüche 8 bis 9, des Weiteren mit einem Datenkonzentrator (1410), der über einen ersten Draht (1418) und einen zweiten Draht (1420) mit dem Kraftstoffhöhensensor (103) kommunikativ gekoppelt ist, wobei zumindest einer von dem ersten Draht (1418) und dem zweiten Draht (1420) unterschiedliche elektrische Eigenschaften aufweist oder sich jeweils in einer unterschiedlichen Umgebung befindet, wobei eine Umgebung eine nasse Umgebung (1422) und die andere Umgebung eine trockene Umgebung (1424) ist.

12. Fahrzeug (129) nach einem der Ansprüche 8 bis 9, des Weiteren mit einem Datenkonzentrator (1410), der über eine Kommunikationsverbindung (1416), die zwei oder mehr Segmente (1419a und 1419b) aufweist, mit dem Kraftstoffhöhensensor (103) kommunikativ gekoppelt ist, wobei ein erstes Segment (1419a) über einen nichtmetallischen Widerstandsdraht (116) verläuft, und
optional wobei der Datenkonzentrator (1410) des Weiteren einen Ausgang aufweist, der so ausgebildet ist, dass er Daten basierend auf von dem Kraftstoffhöhensensor (103) empfangenen Kraftstoffhöhen(208)-Daten an ein auf einem Kerncomputersystem (130) ausgebildetes Kraftstoffmanagementsystem (134) überträgt, das so ausgebildet ist, dass es ein Indiz für die Kraftstoffmenge basierend auf den von einer Sonde (106) für die Kraftstoffhöhe (208) empfangenen Daten übermittelt.

13. Verfahren (1500), mit:
Einsetzen (1502) eines oder mehrerer Kraftstoffhöhensensoren (103) in den Kraftstoffbehälter (102);
Bereitstellen (1504) einer elektrischen Stromverbindung (117) zwischen jedem Kraftstoffhöhensensor (103) und einem abgedichteten Verbinder (114), der sich durch eine Wand (115) des Kraftstoffbehälters (102) erstreckt; und
Bereitstellen (1506) einer internen Datenkommunikationsverbindung (123) zwischen jedem Kraftstoffhöhensensor (103) und dem abgedichteten Verbinder (114), wobei zumindest die elektrische Stromverbindung (117) einen nichtmetallischen Widerstandsdraht (116) aufweist und der abgedichtete Verbinder (114) eine interne elektronische Schaltung (171) aufweist.

14. Datenkonzentrator (1410), der Folgendes aufweist
eine Schnittstelle (505), die ausgebildet ist, um Daten von einem System (100) für elektrische Energie und Datenkommunikation innerhalb eines Kraftstoffbehälters (102) und über eine Wand (115) des Kraftstoffbehälters (102) aufzunehmen, wobei das System eines gemäß dem Anspruch 6 ist.

## Revendications

1. Système (100), comprenant:
un capteur de hauteur de carburant (103);
un connecteur scellé (114) s'étendant à travers une paroi (115) d'un réservoir de carburant (102);
une connexion d'alimentation électrique (117) entre le capteur de hauteur de carburant (100) et le connecteur scellé (114); et
une connexion de communication de données interne (123) entre le capteur de hauteur de carburant (103) et le connecteur scellé (114), dans lequel au moins la connexion d'alimentation électrique (117) entre le capteur de hauteur de carburant (103) et le connecteur scellé (114) comprend un fil non métallique résistif (116),
dans lequel le connecteur scellé (114) comprend un circuit électronique interne (171).

2. Système (100) selon la revendication 1, dans lequel le fil non métallique résistif (116) comprend l'un d'un thermoplastique chargé en carbone, d'un thermoplastique polyéther éther cétone (PEEK) chargé en carbone, d'un fil ayant une résistance entre environ 100 ohms/mètre et environ 1 Mohms/mètre.

3. Système (100) selon la revendication 1 ou 2, dans lequel la connexion de communication de données interne (123) comprend un fil non métallique résistif (116), et dans lequel la connexion de communication de données interne (123) comprend au moins l'un d'un fil non métallique à résistance élevée pour signal (604a) et d'un fil non métallique à résistance basse pour signal (604b), une connexion de sortie de signal analogique (1001), une connexion de sortie de signal numérique (1102) ou une connexion de sortie de signal optique (1206).

4. Système (100) selon l'une quelconque des revendications 1 à 3, comprenant en outre une connexion de communication de données externe (125) à l'extérieur du réservoir de carburant (102) entre le connecteur scellé (114) et un convertisseur de données optique (1208) ou concentrateur de données.

5. Système (100) selon l'une quelconque des revendications 1 à 3, comprenant en outre une connexion de communication de données externe (125) à l'extérieur du réservoir de carburant (102) entre le connecteur scellé (114) et l'un d'un lecteur de sonde (504), d'un concentrateur de données, ou d'un système informatique central (CCS) (130).

6. Système (100) selon la revendication 5, dans lequel la connexion de communication de données externe (125) à l'extérieur du réservoir de carburant (102) comprend un bus de données numériques, un bus Aeronautical Radio Incorporated (ARINC) ou un bus Controller Area Network (CAN) (1112).

7. Système (100) selon l'une quelconque des revendications 1 à 6, dans lequel le capteur de hauteur de carburant (103) comprend l'une d'une première sonde de hauteur de carburant (106) qui comprend une connexion électrique locale à la terre (131) ou d'une sonde de hauteur de carburant flottante (106) sans connexion électrique à la terre.

8. Véhicule (129), comprenant:
un réservoir de carburant (102);
un système d'alimentation et de communication de données (100) à l'intérieur du réservoir de carburant (102), dans lequel le système (100) est selon l'une quelconque des revendications 1 à 7.

9. Véhicule (129) selon la revendication 8, comprenant en outre une connexion de communication de données externe (125) entre le connecteur scellé (114) et au moins l'un d'un système informatique central (130), d'un lecteur optique (504), d'un lecteur de sonde (504), d'un amplificateur ou d'un bus de données numériques, un bus Aeronautical Radio Incorporated (ARINC) ou un bus Controller Area Network (CAN) (1112) connecté au connecteur scellé (114).

10. Véhicule (129) selon l'une quelconque des revendications 8 à 9, comprenant en outre:
un concentrateur de données (504) couplé en communication au capteur de hauteur de carburant (103) par l'intermédiaire d'un fil non métallique résistif (116) sur au moins une partie (1415) d'une liaison (1416) entre le concentrateur de données (1410) et le capteur de hauteur de carburant (103); et
une entrée (1417) du connecteur scellé (114) configurée pour recevoir des données du capteur de hauteur de carburant (103) sur le fil non métallique résistif (116) sur la au moins une partie (1415) de la liaison (1416) entre le concentrateur de données (1410) et le capteur de hauteur de carburant (103), et éventuellement dans lequel le fil non métallique résistif (116) est interne au réservoir de carburant (102).

11. Véhicule (129) selon l'une quelconque des revendications 8 à 9, comprenant en outre un concentrateur de données (1410) couplé en communication au capteur de hauteur de carburant (103) par l'intermédiaire d'un premier fil (1418) et d'un deuxième fil (1420), dans lequel au moins l'un du premier fil (1418) et du deuxième fil (1420) a des propriétés électriques différentes ou est chacun dans un environnement différent, un environnement étant un environnement humide (1422) et l'autre environnement étant un environnement sec (1424).'

12. Véhicule (129) selon l'une quelconque des revendications 8 à 9, comprenant en outre un concentrateur de données (1410) couplé en communication au capteur de hauteur de carburant (103) par l'intermédiaire d'une liaison de communications (1416) comprenant deux segments ou plus (1419a et 1419b), dans lequel un premier segment (1419a) est sur un fil non métallique résistif (116), et éventuellement dans lequel le concentrateur de données (1410) comprend en outre une sortie configurée pour transmettre des données sur la base des données de hauteur de carburant (208) reçues du capteur de hauteur de carburant (103) à un système de gestion de carburant (134) réalisé sur un système informatique central (130) configuré pour transmettre une indication de quantité de carburant sur la base des données de hauteur de carburant (208) reçues d'une sonde de hauteur de carburant (106).

13. Procédé (1500), comprenant:
l'insertion (1502) d'un ou plusieurs capteurs de hauteur de carburant (103) dans le réservoir de carburant (102);
la fourniture (1504) d'une connexion d'alimentation électrique (117) entre chaque capteur de hauteur de carburant (103) et un connecteur scellé (114) s'étendant à travers une paroi (115) du réservoir de carburant (102); et
la fourniture (1506) d'une connexion de communication de données interne (123) entre chaque capteur de hauteur de carburant (103) et le connecteur scellé (114), dans lequel au moins la connexion d'alimentation électrique (117) comprend un fil non métallique résistif (116) et le connecteur scellé (114) comprend un circuit électronique interne (171).

14. Concentrateur de données (1410), comprenant
une interface (505) configurée pour recevoir des données d'un système (100) pour l'alimentation électrique et la communication de données à l'intérieur d'un réservoir de carburant (102) et à travers une paroi (115) du réservoir de carburant (102), dans lequel le système est selon la revendication 6.
